Europäisches Patentamt

European Patent Office

Office européen des brevets

(19)

(11) **EP 1 662 125 A1**

(12) **DEMANDE DE BREVET EUROPEEN**

(43) Date de publication:
**31.05.2006 Bulletin 2006/22**

(51) Int Cl.:
*F02D 41/02* *(2006.01)*

(21) Numéro de dépôt: **05300851.2**

(22) Date de dépôt: **24.10.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **04.11.2004 FR 0411756**

(71) Demandeur: **Renault s.a.s.**
**92100 Boulogne Billancourt (FR)**

(72) Inventeur: **Sall, M. Bobo**
**75014 PARIS (FR)**

(54) **Procédé de commande du groupe motopropulseur d'un véhicule automobile**

(57) Procédé de commande du groupe moto-propulseur d'un véhicule automobile, tel que, pendant les changements de rapports de la boîte de vitesses robotisée, le calculateur de contrôle de la transmission envoie au moteur une consigne de couple dit rapide ($C_{Re}$) déterminant la dynamique de réponse du moteur et une consigne de couple dit lent ($C_{Le}$), telles que :

- lors du débrayage, pour réduire le couple du moteur de la valeur demandée par le conducteur jusqu'à zéro, elles sont liées par un rapport constant :

$$C_{Ld} = max(K_d * C_{Rd} , C_{Lmin})$$

ou par un écart constant :

$$C_{Ld} = max(C_{Rd} + \Delta_{offset} , C_{Lmin})$$

- lors du réembrayage, la consigne de couple rapide croît linéairement et reste inférieure à la consigne de couple lent, ces deux consignes étant liées soit par un rapport constant, de coefficient $K_e$ :

$$C_{Le} = K_e * C_{Re}$$

soit par un écart constant :

$$C_{Le} = C_{Re} + \Delta'_{offset}$$

FIG_2

## Description

La présente invention concerne la commande du groupe motopropulseur d'un véhicule automobile, comprenant une boîte de vitesses mécanique dite robotisée, particulièrement pendant des changements de rapports. Les changements de rapports d'une telle boîte de vitesses sont exécutés d'après des ordres émis par un calculateur de contrôle de la transmission qui pilote des actionneurs associés à la boîte de vitesses.

Dans le cas des moteurs thermiques traditionnels à essence, équipés d'un carburateur avec une pédale d'accélérateur reliée par un câble au volet d'admission du carburateur, le calculateur de contrôle de la transmission robotisée ou automatisée, délivre pendant les changements de rapports une consigne de couple au calculateur de contrôle du moteur qui pilote en conséquence le retrait de l'avance à l'allumage.

Dans le cas des moteurs équipés d'un boîtier papillon d'admission d'air qui est motorisé, le calculateur de contrôle du moteur à essence peut, en plus du retrait d'avance à l'allumage, piloter la position du papillon, donc l'admission d'air, indépendamment de la position de la pédale d'accélérateur.

Le problème technique qui se pose dans ce type de groupe motopropulseur à boîte de vitesses robotisée à interruption de couple est l'amélioration de la dynamique de réponse du moteur pendant les phases de changements de rapports, où cette dynamique de réponse est essentielle à la fois pour l'agrément de conduite pendant les changements de rapports et pour la durée de vie de l'embrayage.

Une stratégie actuelle de pilotage d'un moteur à combustion interne couplée à une boîte de vitesses robotisée est décrite dans la demande de brevet français publiée sous le No. 2 732 276, au nom de Magneti Marelli. Le calculateur de contrôle de la boîte de vitesses robotisée à rupture de couple délivre une seule consigne de couple au moteur et le calculateur de contrôle du moteur réalise au mieux la consigne qui lui est envoyée sans connaissance de la phase de fonctionnement de la boîte de vitesses. Un tel mode de pilotage ne permet pas d'optimiser la réponse en couple du moteur.

Actuellement, la mise au point de paramètres de calibration des moteurs, pour un point de fonctionnement donné, n'est réalisée que sur un intervalle relativement réduit autour de ce point de fonctionnement. Au-delà de cet intervalle, les consignes de couple, délivrées par le calculateur de la transmission robotisée, sont réalisées de façon approximative, car elles ne correspondent pas à des points calibrés. De plus, l'estimation du couple délivré par le moteur est aussi moins précise.

Le but de l'invention est de résoudre ce problème en proposant un procédé de commande d'un groupe motopropulseur dont les calculateurs de contrôle du moteur et de la transmission échangent des informations, le calculateur de contrôle de la transmission automatisée pouvant notamment prendre la main sur le moteur pendant les changements de rapports et envoyer à son calculateur de contrôle des consignes à appliquer pendant les rapports, en particulier une consigne de couple rapide et une consigne de couple lent.

Pour cela, l'objet de l'invention est un procédé de commande du groupe moto-propulseur d'un véhicule automobile, composé d'un moteur thermique piloté par un premier calculateur de contrôle, et d'une transmission de couple du moteur vers les roues composée d'une boîte de vitesses robotisée et d'un embrayage situé entre le moteur et la boîte de vitesse pilotés par un second calculateur de contrôle, les premier et second calculateurs de contrôle respectifs de la transmission robotisée et du moteur communiquant et échangeant des informations, caractérisé en ce que, pendant les changements de rapports de boîte de vitesses, le premier calculateur de contrôle de la transmission envoie au moteur deux consignes de couple à appliquer précisément pendant les changements de rapports, une consigne de couple dit rapide déterminant la dynamique de réponse du moteur et une consigne de couple dit lent, telles que :

- lors de la première phase $\varphi_1$ dite de débrayage, pour réduire le couple du moteur de la valeur demandée par le conducteur ou d'une valeur voisine, définie par une stratégie de contrôle, jusqu'à une valeur proche de zéro, la consigne de couple rapide $C_{Rd}$ et la consigne de couple lent $C_{Ld}$ sont liées par un rapport constant, de coefficient $K_d$ :

$$C_{Ld} = \max (K_d \ast C_{Rd}, C_{Lmin})$$

ou par un écart constant :

$$C_{Ld} = \max (C_{Rd} + \Delta_{offset}, C_{Lmin})$$

de sorte qu'à la fin du débrayage, alors que la consigne de couple rapide $C_{Rd}$ atteint un seuil minimal négatif $C_{Rmin}$, la consigne de couple lent $C_{Ld}$ atteint un seuil minimal $C_{Lmin}$ positif, défini afin que le papillon motorisé ne soit pas complètement fermé, ces deux valeurs de seuil minimales $C_{Lmin}$ et $C_{Rmin}$ étant maintenues constantes pendant la deuxième phase $\varphi_2$, se rapportant au dégagement du rapport engagé et à l'engagement du rapport cible,

- lors de la troisième phase $\varphi_3$ de réembrayage, la consigne de couple rapide $C_{Re}$ croît linéairement et reste inférieure à la consigne de couple lent $C_{Le}$, ces deux consignes étant liées soit par un rapport constant, de coefficient $K_e$ :

$$C_{Le} = K_e * C_{Re}$$

soit par un écart constant : $C_{Le} = C_{Re} + \Delta'_{offset}$

Selon une autre caractéristique de l'invention, dans le cas d'un moteur thermique à essence, le calculateur de contrôle de la transmission délivre, pendant les changements de rapports deux consignes de couple, une consigne de couple rapide $C_{Rd}$ déterminant la consigne de dégradation du couple moteur par retrait d'avance et une consigne de couple lent $C_{Ld}$ déterminant la consigne de position du boîtier papillon d'admission d'air.

Selon une autre caractéristique de l'invention, dans le cas d'un moteur Diesel, le calculateur de contrôle de la transmission délivre deux consignes de couple, une consigne de couple rapide $C_{Rd}$ qui permet de calculer le débit du gasoil injecté et une consigne de couple lent $C_{Ld}$ qui permet de calculer les consignes à appliquer aux actionneurs, tels que le turbocompresseur.

D'autres caractéristiques et avantages de l'invention apparaîtront à la lecture de la description d'un procédé de commande illustrée par les figures suivantes qui sont :

- la figure 1 : un schéma fonctionnel d'un groupe motopropulseur à boîte de vitesses mécanique robotisée ;

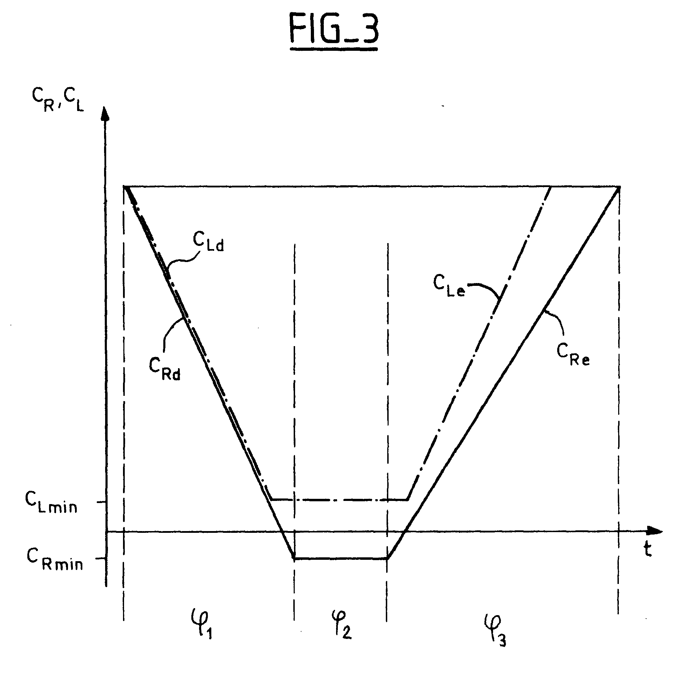

- les figures 2 et 3 : l'évolution des consignes de couple moteur pendant un changement de rapports montants, respectivement d'après le procédé selon l'invention et d'après une variante dudit procédé.

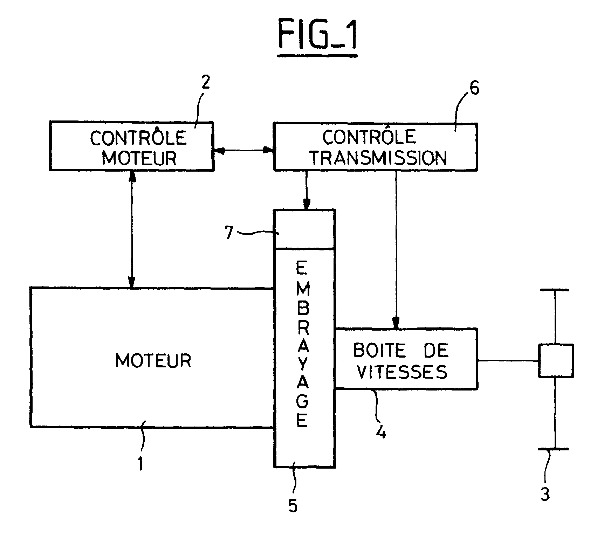

Comme le montre le schéma fonctionnel de la figure 1, un groupe moto-propulseur est composé d'un moteur thermique 1 piloté par un calculateur de contrôle 2, et d'une transmission assurant l'adaptation réciproque du couple disponible en sortie du moteur à la force de traction momentanément nécessaire au niveau des roues 3. Cette transmission est composée d'une boîte de vitesses robotisée 4 et d'un embrayage 5 situé entre le moteur 1 et la boîte de vitesses pilotés par un calculateur de contrôle 6. La boîte de vitesses, équipée d'au moins un actionneur destiné à piloter l'embrayage, est commandée par le calculateur de contrôle 6 relié à un capteur de vitesse véhicule notamment pour contrôler l'exécution par les actionneurs des ordres de passage émis en fonction de la vitesse du véhicule, et qui communique avec le calculateur de contrôle 2 du moteur.

Le calculateur 6 de la transmission robotisée est relié à l'actionneur 7 de l'embrayage 5 qu'il pilote et selon l'invention, il communique et échange des informations avec le calculateur 2 de contrôle du moteur. Ainsi, le calculateur de contrôle de la transmission automatisée peut prendre la main sur le moteur pendant les changements de rapports de boîte de vitesses et peut envoyer au moteur, par l'intermédiaire de son calculateur de contrôle, les consignes de couple à appliquer précisément pendant les rapports.

Selon une caractéristique de l'invention, le calculateur de contrôle de cette transmission délivre deux consignes de couple, un couple dit rapide et un couple dit lent. Dans le cas d'un moteur thermique à essence, la consigne de couple rapide permet de déterminer la consigne de dégradation du couple moteur par retrait d'avance et la consigne de couple lent permet de déterminer la consigne de position du boîtier papillon d'admission d'air. Dans le cas d'un moteur Diesel, la consigne de couple rapide permet de calculer le débit du gasoil injecté et celle de couple lent permet de calculer les consignes à appliquer aux actionneurs, tels que le turbocompresseur.

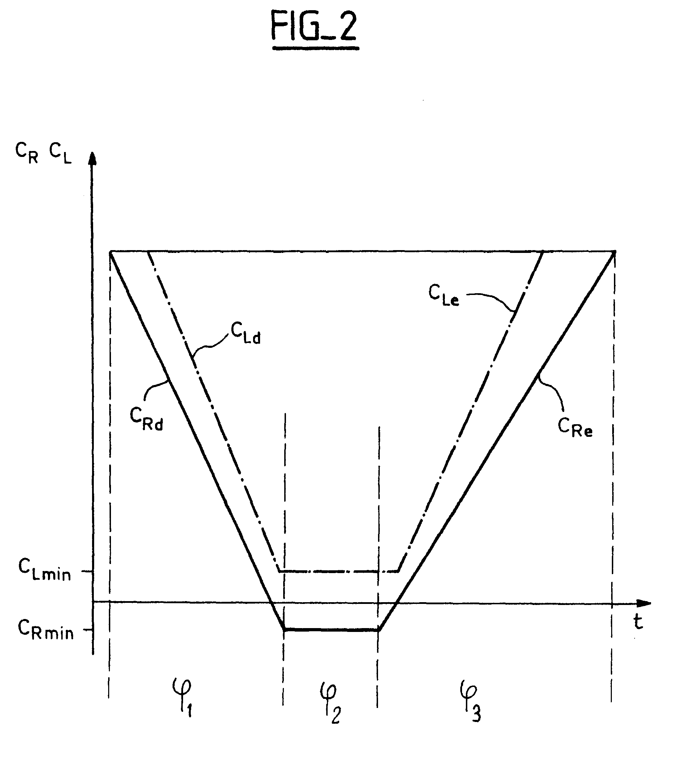

Le procédé de commande d'un groupe motopropulseur selon l'invention définit des consignes de couples lent $C_L$ et rapide $C_R$ dont le profil est illustré sur la figure 2.

Pendant un changement de rapports de la boîte de vitesses, dans le sens montant ou dans le sens descendant, il est possible de décomposer un changement de rapport en trois phases : le débrayage, le dégagement et l'engagement du rapport cible, puis le réembrayage.

Lors de la phase $\varphi_1$ dite de débrayage, l'embrayage de la transmission est ouvert progressivement par l'actionneur piloté par le calculateur de contrôle de la transmission, jusqu'à une ouverture complète pour permettre le dégagement du rapport engagé. Pendant cette ouverture, le calculateur de la transmission délivre au calculateur de contrôle du moteur deux consignes de couple, pour réduire le couple du moteur de la valeur demandée par le conducteur ou d'une valeur voisine, définie par une stratégie de contrôle, jusqu'à une valeur proche de zéro. Cette décroissance du couple moteur est couplée à l'ouverture de l'embrayage de la transmission pour éviter les envolées du régime moteur pendant cette phase.

La consigne de couple rapide $C_{Rd}$ déterminant la dynamique de réponse du moteur et la consigne de couple lent $C_{Ld}$ déterminant le potentiel de couple sont liées par un rapport constant, de coefficient $K_d$, jusqu'à ce que la consigne $C_{LD}$ atteigne une valeur minimale $C_{Lmin}$ :

$$C_{Ld} = \max (K_d * C_{Rd}, C_{Lmin})$$

ou par un écart constant :

$$C_{Ld} = \max (C_{Rd} + \Delta_{offset}, C_{Lmin})$$

Les consignes de couple sont définies comme des pentes ou peuvent avoir des profils différents suivant l'agrément de conduite recherché. A la fin du débrayage, alors que la consigne de couple rapide atteint un seuil minimal $C_{Rmin}$ négatif pour que le régime moteur chute le plus rapidement possible. Cela permet de réduire le glissement de l'embrayage, lors de la phase de réembrayage, et par conséquent l'énergie dissipée dans cet embrayage, la consigne de couple lent atteint un seuil minimal $C_{Lmin}$ positif, défini afin que le papillon motorisé ne soit pas complètement fermé, laissant passer un filet d'air dans le collecteur d'admission. Ainsi, le moteur aura une dynamique de réponse très importante pendant la phase $\varphi_3$ de réembrayage.

Dans le cas d'un moteur à essence, la consigne de couple rapide $C_{Rd}$ détermine la consigne de dégradation du couple moteur par retrait d'avance à l'allumage et la consigne de couple lent détermine la consigne de position du papillon.

Lors de la deuxième phase $\varphi_2$, se rapportant au dégagement du rapport engagé et à l'engagement du rapport cible, le couple lent est maintenu à sa valeur minimale positive $C_{Lmin}$, définie dans la phase précédente, pour permettre une bonne dynamique de réponse du moteur lors de la troisième phase $\varphi_3$ de réembrayage. Le couple rapide est maintenu égal à la valeur de couple minimale négative $C_{Rmin}$ correspondant au couple de frottement du moteur. Cela permet d'obtenir une décroissance rapide du régime moteur et ainsi une limitation de l'énergie dissipée dans l'embrayage.

Enfin, lors de la troisième phase $\varphi_3$ de réembrayage, le procédé de commande permet d'obtenir une grande dynamique de réponse du moteur thermique et de l'actionneur d'embrayage à la demande de couple du conducteur, pour rétablir le couple de traction du véhicule le plus rapidement possible. Pendant la fermeture progressive de l'embrayage par l'actionneur, piloté par le calculateur de contrôle de la transmission, ce dernier délivre encore au calculateur de contrôle du moteur deux consignes de couple, une consigne de couple rapide $C_{Re}$ correspondant à la dynamique de réponse du moteur, soit à la consigne de dégradation du couple moteur par retrait d'avance à l'allumage qui est inférieure à la consigne de couple lent $C_{Le}$ déterminant la consigne d'ouverture du papillon d'admission d'air, ces deux consignes étant liées soit par un rapport constant, de coefficient $K_e$ :

$$C_{Le} = K_e \ast C_{Re}$$

soit par un écart constant :

$$C_{Le} = C_{Re} + \Delta'_{offset}$$

Le moteur thermique respecte donc tout d'abord la consigne de couple lent, soit d'ouverture du papillon, pour prépositionner le couple moteur, et l'écart entre les deux consignes de couple lent et de couple rapide est réalisé par la dégradation de l'avance à l'allumage pour obtenir le couple moteur demandé par le conducteur. Cette dégradation d'avance, obtenue par réglages cartographiques, ne peut dépasser 20% du couple moteur, au point de fonctionnement considéré. Grâce à la valeur minimale d'ouverture du papillon, un filet d'air demeure dans le collecteur d'admission d'air de sorte que la réponse du moteur est plus rapide que si le papillon était totalement fermé. En effet, l'air pénétrant lentement dans le collecteur d'admission, on ne peut obtenir une grande dynamique de production de couple moteur.

Une phase de modulation du couple moteur et du couple transmis par l'embrayage peut être intégrée à la fin de la troisième phase de réembrayage, dans le but d'éviter un à-coup généré par une fermeture brutale de l'embrayage et désagréable pour le conducteur et ses passagers.

Selon une variante du procédé selon l'invention, applicable quand la dynamique de réponse du moteur n'est pas essentielle dans la première phase de débrayage, les consignes de couple rapide $C_{Rd}$ et lent $C_{Ld}$ sont identiques pendant le débrayage jusqu'à ce que le couple lent $C_{Ld}$ soit égal à sa valeur minimale $C_{Lmin}$ positive, définie dans la version précédente, de sorte que le couple fourni par le moteur est réalisé uniquement par fermeture du boîtier papillon sans dégradation d'avance.

Pour ta deuxième phase $\varphi_2$ se rapportant au dégagement du rapport engagé et à l'engagement du rapport cible, le couple lent est maintenu à sa valeur minimale positive $C_{Lmin}$, et le couple rapide est maintenu égal à la valeur de couple minimale négative $C_{Rmin}$ correspondant au couple de frottement du moteur.

Enfin, la troisième phase $\varphi_3$ de réembrayage, selon la variante du procédé de commande est identique à la première version pour permettre d'obtenir une grande dynamique de réponse du moteur thermique et de l'actionneur d'embrayage à la demande de couple du conducteur.

Grâce à l'invention, la dynamique de réponse d'un moteur thermique, accouplé à une boîte de vitesses robotisée à interruption de couple, est sensiblement améliorée par le calculateur de contrôle de la transmission qui optimise ses consignes de couple et réalise une estimation du couple moteur au vilebrequin la plus juste possible.

## Revendications

1. Procédé de commande du groupe moto-propulseur d'un véhicule automobile, composé d'un moteur thermique piloté par un premier calculateur de contrôle, et d'une transmission de couple du moteur vers les roues composée d'une boîte de vitesses robotisée et d'un embrayage situé entre le moteur et la boîte de vitesse pilotés par un second calculateur de contrôle, les premier et second calculateurs de contrôle respectifs de la transmission robotisée et du moteur communiquant et échangeant des informations, **caractérisé en ce que**, pendant les changements de rapports de boîte de vitesses, le premier calculateur de contrôle (6) de la transmission envoie au moteur (1) deux consignes de couple à appliquer précisément pendant les changements de rapports, une consigne de couple dit rapide déterminant la dynamique de réponse du moteur et une consigne de couple dit lent, telles que :

- lors de la première phase ($\varphi_1$) dite de débrayage, pour réduire le couple du moteur de la valeur demandée par le conducteur ou d'une valeur voisine, définie par une stratégie de contrôle, jusqu'à une valeur proche de zéro, la consigne de couple rapide ($C_{Rd}$) et la consigne de couple lent ($C_{Ld}$) sont liées par un rapport constant, de coefficient ($K_d$), jusqu'à ce que la consigne $C_{Ld}$ atteigne une valeur minimale :

$$C_{Ld} = \max (K_d * C_{Rd}, C_{Lmin})$$

ou par un écart constant :

$$C_{Ld} = \max (C_{Rd} + \Delta_{offset}, C_{Lmin})$$

de sorte qu'à la fin du débrayage, alors que la consigne de couple rapide ($C_{Rd}$) atteint un seuil minimal négatif ($C_{Rmin}$), la consigne de couple lent ($C_{Ld}$) atteint un seuil minimal ($C_{Lmin}$) positif, défini afin que le papillon motorisé ne soit pas complètement fermé, ces deux valeurs de seuil minimales ($C_{Lmin}$) et ($C_{Rmin}$) étant maintenues constantes pendant la deuxième phase ($\varphi_2$), se rapportant au dégagement du rapport engagé et à l'engagement du rapport cible,

- lors de la troisième phase ($\varphi_3$) de réembrayage, la consigne de couple rapide ($C_{Re}$) croît linéairement et reste inférieure à la consigne de couple lent ($C_{Le}$), ces deux consignes étant liées soit par un rapport constant, de coefficient $K_e$ :

$$C_{Le} = K_e * C_{Re}$$

soit par un écart constant :

$$C_{Le} = C_{Re} + \Delta'_{offset}$$

2. Procédé de commande du groupe moto-propulseur selon la revendication 1, **caractérisé en ce que**, pendant la phase ($\varphi_1$) de débrayage, les consignes de couple rapide ($C_{Rd}$) et lent ($C_{Ld}$) sont identiques jusqu'à ce que le couple lent ($C_{Ld}$) soit égal à sa valeur minimale ($C_{Lmin}$) positive, de sorte que le couple fourni par le moteur est réalisé uniquement par fermeture du boîtier papillon sans dégradation d'avance.

3. Procédé de commande du groupe moto-propulseur selon l'une des revendications 1 ou 2, **caractérisé en ce que** les consignes de couple rapide ($C_{Rd}$) et lent ($C_{Ld}$) sont définies comme des pentes.

4. Procédé de commande du groupe moto-propulseur selon l'une des revendications 1 ou 2, **caractérisé en ce que** les consignes de couple rapide ($C_{Rd}$) et lent ($C_{Ld}$) ont des profils différents, déterminés suivant l'agrément de conduite recherché.

5. Procédé de commande du groupe moto-propulseur selon l'une des revendications précédentes, **caractérisé en ce que**, dans le cas d'un moteur thermique à essence, le calculateur de contrôle (2) de la transmission délivre, pendant les changements de rapports deux consignes de couple, une consigne de couple rapide ($C_{Rd}$) déterminant la consigne de dégradation du couple moteur par retrait d'avance et une consigne de couple lent ($C_{Ld}$) déterminant la consigne de position du boîtier papillon d'admission d'air.

6. Procédé de commande du groupe moto-propulseur selon l'une des revendications précédentes, **caractérisé en ce que**, dans le cas d'un moteur Diesel, le calculateur de contrôle (2) de la transmission délivre deux consignes de couple, une consigne de couple rapide ($C_{Rd}$) qui permet de calculer le débit du gasoil injecté et une consigne de couple lent ($C_{Ld}$) qui permet de calculer les consignes à appliquer aux actionneurs, tels que le turbocompresseur.

# FIG_1

CONTRÔLE MOTEUR — 2

CONTRÔLE TRANSMISSION — 6

7

EMBRAYAGE

MOTEUR

1

5

BOITE DE VITESSES

4

3

# FIG_2

# FIG_3

**Office européen
des brevets**

**RAPPORT DE RECHERCHE EUROPEENNE**

Numéro de la demande

EP 05 30 0851

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2004/106498 A1 (BADILLO ET AL.) 3 juin 2004 (2004-06-03) * alinéas [0003], [0005], [0006] * * alinéas [0012] - [0017] * * alinéas [0042] - [0049]; figures 4-6 * ----- | 1-6 | F02D41/02 B60K41/04 |
| A | DE 199 06 871 A1 (SIEMENS AG; MANNESMANN SACHS AG) 24 août 2000 (2000-08-24) * colonne 6, ligne 64 - colonne 7, ligne 29; figure 2 * ----- | 1-6 | |
| A | DE 100 25 586 A1 (SIEMENS AG) 6 décembre 2001 (2001-12-06) * abrégé * * alinéas [0022] - [0026]; figures 1,2 * ----- | 1-6 | |
| A | DE 103 01 534 A1 (DAIMLERCHRYSLER AG) 29 juillet 2004 (2004-07-29) * alinéa [0001] - alinéa [0017] * ----- | 1 | |
| D,A | FR 2 732 276 A (MAGNETI MARELLI FRANCE) 4 octobre 1996 (1996-10-04) * page 1, ligne 1 - page 3, ligne 22 * ----- | 1 | DOMAINES TECHNIQUES RECHERCHES (IPC) F02D B60K |

Le présent rapport a été établi pour toutes les revendications

| Lieu de la recherche | Date d'achèvement de la recherche | Examinateur |
|---|---|---|
| Munich | 6 février 2006 | Wettemann, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

**EP 1 662 125 A1**

**ANNEXE AU RAPPORT DE RECHERCHE EUROPEENNE
RELATIF A LA DEMANDE DE BREVET EUROPEEN NO.**

EP 05 30 0851

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2006

| Document brevet cité au rapport de recherche | | Date de publication | Membre(s) de la famille de brevet(s) | | Date de publication |
|---|---|---|---|---|---|
| US 2004106498 | A1 | 03-06-2004 | AUCUN | | |
| DE 19906871 | A1 | 24-08-2000 | WO | 0048861 A1 | 24-08-2000 |
| | | | EP | 1181166 A1 | 27-02-2002 |
| | | | FR | 2789951 A1 | 25-08-2000 |
| | | | US | 2002037790 A1 | 28-03-2002 |
| DE 10025586 | A1 | 06-12-2001 | FR | 2809353 A1 | 30-11-2001 |
| | | | US | 2002039950 A1 | 04-04-2002 |
| DE 10301534 | A1 | 29-07-2004 | AUCUN | | |
| FR 2732276 | A | 04-10-1996 | BR | 9604867 A | 26-05-1998 |
| | | | DE | 69604791 D1 | 25-11-1999 |
| | | | DE | 69604791 T2 | 27-04-2000 |
| | | | EP | 0814969 A1 | 07-01-1998 |
| | | | ES | 2138334 T3 | 01-01-2000 |
| | | | WO | 9631359 A1 | 10-10-1996 |
| | | | US | 6035734 A | 14-03-2000 |

EPO FORM P0460

Pour tout renseignement concernant cette annexe : voir Journal Officiel de l'Office européen des brevets, No.12/82